# EUROPEAN PATENT SPECIFICATION

(11) **EP 0 633 836 B1**
(45) Date of publication and mention of the grant of the patent: **19.02.1997**
(21) Application number: 93907535.4
(22) Date of filing: 17.03.1993
(51) Int. Cl.: B29C 65/34, C09J 5/10, C09J 5/06

(54) **HEATING MEANS FOR THERMOPLASTIC BONDING**
HEIZVORRICHTUNG ZUM THERMOPLASTISCHEN SCHWEISSEN
ELEMENT CHAUFFANT POUR SOUDAGE THERMOPLASTIQUE

(30) Priority: 30.03.1992 US 860480
(43) Date of publication of application: 18.01.1995
(73) Proprietor: UNITED TECHNOLOGIES CORPORATION, Hartford, CT 06101 (US)
(72) Inventor: JACARUSO, Gary, J., Milford, CT 06460 (US); DAVIS, Geoffrey, C., Madison, CT 06443 (US); MCINTIRE, Allen, J., Ansonia, CT 06401 (US)
(74) Representative: Klunker . Schmitt-Nilson . Hirsch
(86) International application number: US9302392
(87) International publication number: WO9319926

(56) References cited:
- EP-A- 0 430 761
- EP-A- 0 491 645
- WO-A-87/06182
- CH-A- 456 818
- DE-A- 1 530 340
- DE-A- 2 653 760
- DE-A- 3 125 393
- DE-A- 3 802 995
- FR-A- 1 072 800
- FR-A- 1 433 988
- FR-A- 2 620 648
- FR-A- 2 654 978
- GB-A- 2 119 710
- GB-A- 2 200 590

## Description

This is a Continuation-In-Part of prior co-pending patent application Serial No. 07/628,245, filed December 17, 1990, entitled "Bonding of Thermoset Composite Structures".

### Technical Field

This invention relates to heating means used in structural bonding, and more particularly to heating means used in thermoplastic bonding of thermoset composite structures.

### Background Art

Thermoset composites have received widespread use in the aircraft industry as a structural material. This type of composite can provide a light weight structure of relatively high strength. To obtain a high strength structural bond with thermoset composites currently requires costly methods of bonding combined with mechanical fasteners.

One method of bonding thermoset composite structures together is to place thermoset resin film adhesive material between the surfaces to be bonded, followed by applying heat and pressure to the joint zone. German Patent Document DE 3125393 A1 describes a method for interconnecting structural walls (2, 3) utilizing a double-sided adhesive tape (7) having two adhesive layers (9, 10) that are heat reactive. An electric heating element (14) may be disposed within the adhesive tape (7) between the adhesive layers (9, 10). This process is not very practical as it involves the application of relatively high heat, e.g., 394K - 450K (250 - 350°F) and pressure, e.g., 17.2 X 10⁴ N/m² (25 psi) minimum, for extended periods of time (2 hours minimum at temperature). Thermal expansion can become a problem when large areas of structure are heated as required for this process. This is due to differing rates of thermal expansion of localized which causes thermal strain when the structure is cooled and can cause deformations. Another drawback is that thermoset adhesives can only be processed once and the bond is not reversible for repair or replacement of subsequently damaged substructures.

A second method currently used involves attaching together thermoset composite structures using mechanical fasteners combined with room temperature curing thermoset paste adhesive applied to joint surfaces. This method requires that the components being joined be pre-fitted and drilled for pilot holes, disassembled, cleaned, and bond prepared. Adhesive is then applied to joint surfaces, the components are then reassembled, and the adhesive cured (usually 24 hours at room temperature). The next step is to drill and ream holes for each fastener and finally the fasteners are installed. This method is costly due to the use of mechanical fasteners and the labor intensive nature of the method.

An alternative to these processes is to use a film of thermoplastic adhesive between the thermoset composite structures being joined together. Since thermoplastic may be repeatedly melted and refused, the bonding process can be reversed as needed. Unfortunately, current thermoset resins will not chemically adhere with sufficient strength to suitable thermoplastic adhesive material to meet aircraft requirements for joining structural components. Therefore, this method is not practical in situations requiring high strength bonds.

Heating means for the bonding process are typically apparatus for induction heating or electrical resistance heating. Induction heating is adequate, but difficult to apply for repairs or replacements performed in the field. Electrical resistance heaters, typically embedded in the bond, are more easily re-used for repair and replacement functions. For example*,* Swiss Patent Document No. 456,818 describes a heating means for interconnecting structural elements (11, 12) by means of a mechanically solid adhesive connection. The adhesive substance (20) is a thermally hardenable synthetic plastic material mixture having embedded therein an electrical conductor (21) such as a wound wire, an array of parallel wires, or an aluminum foil of thin cross section. The electrical conductor (21) may be provided on both sides with an electrically insulating protective layer (22) such as a flat layer of loose glass fiber sliver or loose glass fiber fabric. The beating elements used as resistance heaters in the prior art have limitations, however, one limitation is the occurrence of hot spots and cold spots during the bonding process. The hot spots and cold spots are due to uneven heating provided by the heating element. The result is a degradation in the quality of the bond.

### Disclosure of the Invention

The object of the invention is an improved method of bonding two thermoset composite structures.

As disclosed in claim 1, thermoset composite structures are bonded together using thermoplastic adhesive strips which are comprised of a layer of suitable thermoplastic material and a ply of dry fiber reinforcement which is partially embedded in the layer of thermoplastic material, wherein the exposed dry fiber reinforcement is coated with a thermoset resin. The surfaces of uncured thermoset composite structures are prepared by positioning adhesive strips with the thermoset resin side towards the composite structures. The composite structures are then cured by conventional means. Subsequent to curing, the bonding surfaces (now coated with the thermoplastic adhesive strip) are pressed together and heated to fuse the joint. During this process sufficient heat is applied locally to melt and fuse the thermoplastic adhesive material without degrading the adjacent composite structure. The joint is allowed to cool using the composite structure as a heat sink.

The layer of dry fiber reinforcement, which bonds to both the thermoplastic adhesive material and the thermoset material (during the cure cycle), provides the means to mechanically lock the thermoset composite structure to the thermoplastic adhesive. This eliminates the need for a chemical bond to join the two components. The use of a thermoplastic material as an adhesive allows the bonding process to be easily and quickly reversed for repair or replacement of the thermoset structure.

According to the present invention, the heat applying means is a heating element comprised of a resistance heating material embedded within two layers of thermoplastic adhesive material. The bonding surfaces are heated by placing the heating element between the bonding surfaces of the cured structures, applying pressure to the joint, and passing electrical energy, sufficient to heat the joint to above the melting temperature of the thermoplastic material, through the resistance heating material for a duration sufficient to fuse the layers of thermoplastic adhesive material. The heating element remains within the joint after bonding and provides a convenient mechanism to reheat the joint and reverse the bonding process.

According to a specific embodiment, the heating element includes a resistance heating material, means to prevent short circuits between the resistance heating element and the structures to be bonded, and a pair of low resistance electrical leads. The means to prevent short circuits includes two layers of electrically insulating material extending about opposite sides of the resistance heating material such that the resistance heating material is interposed therebetween. The electrical leads extend across the width of the resistance heater, are spaced lengthwise along the heating element, and are connected to a power supply.

According further to the present invention, a method to heat adjacent bond surfaces includes the steps of placing the heating element between the bond surfaces and passing electrical energy between the electrical leads.

According to a further embodiment of the present invention, a heating element includes a plurality of electrical leads spaced along the length of the heating element, wherein each adjacent pair of leads defines a segment of the heating element. The plurality of electrical leads permits a method of heating the segments sequentially such that the bond surfaces may be bonded one segment at a time.

A principle feature of the present invention is the means to prevent short circuits during the bonding of conductive materials. Another feature is the low resistance electrical leads which extend across the width of the resistance heating material.

A primary advantage of the present invention is the uniform heating of the bond line which result in part from the means to prevent short circuits and the electrical leads. The means to prevent short circuits ensures that electrical energy passes through the resistance heating material and not through adjacent structure. The means to prevent short circuits avoids the occurrence of cold spots due to electrical discontinuity caused by short circuits. The means to prevent short circuits also contributes to uniform heat distribution within the heating element as a result of thermal insulating properties of the means. The electrical leads, disposed along the length of the heating element, uniformly pass electrical energy through the heating element. By extending across the width of the resistance heating material, the electrical leads bound the resistance heating material therebetween to ensure that all portions of the resistance heating material are within the path of the electrical energy flowing between the electrical leads.

Although the invention described is particularly useful as means of heating during the bonding process for thermoset composite structures on aircraft, it should be understood that the invention is equally well suited to any other application in which composite components are joined together in a heat activated process.

The foregoing and other objects, features and advantages of the present invention will become more apparent in light of the following detailed description of the exemplary embodiments thereof, as illustrated in the accompanying drawings.

### Brief Description of the Drawings

FIG. 1 is a sectional view of a thermoplastic adhesive strip.

FIG. 2 is a sectional view of a woven thermoplastic adhesive strip.

FIG. 3a is a perspective view of a heating element, partially cut away to show a resistance heating material and electrical insulation.

FIG. 3b is perspective view of a resistance heating material and two layers of electrical insulation.

FIG. 4 is a sectional view of a pair of bonding surfaces prepared for bonding.

FIG. 5 is a perspective view of a pair of thermoset composite structures after bonding, partially cut away to show the bonding layers.

### Best Mode for Carrying Out the Invention

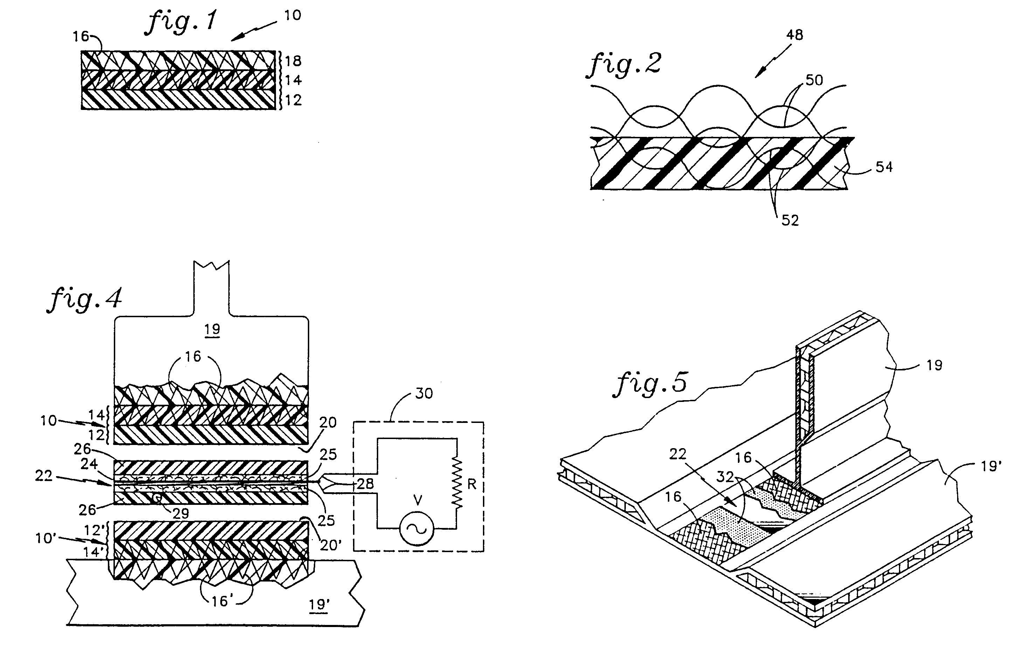

Referring now to FIG. 1, a thermoplastic adhesive strip 10 is comprised of a layer of semi-crystalline thermoplastic material 12, a layer of amorphous thermoplastic material 14, a layer of dry fiber reinforcement 16, and a layer of thermoset resin 18. The size of the strip 10 is dependent on the size of the structures to be bonded together. For illustrative purposes, the thickness of the layer of semi-crystalline thermoplastic material is 0.0102 cm (0.004 in): the thickness of the amorphous thermoplastic material is 0.0076 cm (0.003 in); the thickness of the dry fiber reinforcement is 0.0152 cm (0.006 in); and the thickness of the layer of thermoset resin is sufficient to coat the exposed layer of dry fiber reinforcement.

The fabrication of the adhesive strip involves several steps. First, the layers of semi-crystalline thermoplastic material 12 and the amorphous thermoplastic material 14 are initially fused together by raising the temperature of the two layers 12, 14 above the melting point of the semi-crystalline thermoplastic material and pressing the layers 12, 14 together under a pressure of approximately 3.45 X 10⁴ N/m² to 13.8 X 10⁴ N/m² (5 to 20 psi). Since semi-crystalline thermoplastic material has a higher melting temperature than amorphous thermoplastic material, the two layers 12, 14 become intimately fused.

A typical semi-crystalline thermoplastic material is polyetheretherketone (PEEK), which has a melting temperature of approximately 616K (650°F), and a typical amorphous thermoplastic material is polyetherimide (PEI), which has a melting temperature of approximately 522K (480°F). PEEK and PEI will be utilized in this description for illustrative purposes.

Second, the layer of dry fiber reinforcement 16 is embedded into the layer of PEI 14 by laying up the dry fiber reinforcement 16 onto the layer of PEI 14, applying pressure of approximately 3.45 X 10⁴ N/m² to 10.35 X 10⁴ N/m² (5 to 15 psi), and heating the strip to a temperature above the melting temperature of PEI, but less than the melting temperature of PEEK. Since a temperature less than the melting temperature of PEEK is used, the layer of PEEK 12 acts as a barrier and prevents the layer of dry fiber reinforcement 16 from inserting beyond the PEI layer 14. In this way a portion of the dry fiber reinforcement 16, which is thicker than the layer of PEI 14, is bonded with the layer of PEI 14, and the remainder is exposed (i.e. not embedded). The last step is to coat ('wet-out') the exposed dry fiber reinforcement 16 with a thermoset resin 18.

An alternative method for fabricating a thermoplastic adhesive strip is shown in FIG. 2. A woven thermoplastic adhesive strip 48 is comprised of dry fiber reinforcement strands 50 woven together with commingled strands 52, which are formed by intimately fusing dry fiber reinforcement strands and spun thermoplastic filaments. The weaving produces a material which is predominantly dry fiber reinforcement on one side and commingled strands on the other side. The woven material is pressed onto a layer 54 of thermoplastic material, which is thinner than the woven material, with the side which is predominantly commingled strands adjacent to the layer of thermoplastic material, and sufficient heat is supplied to melt the layer of thermoplastic material. After cooling, the dry fiber reinforcement strands are fused with and partially embedded in the layer of thermoplastic material. The exposed dry fiber strands are then coated with thermoset resin.

Another alternative (not shown) is to weave dry fiber reinforcement strands with thermoplastic filaments so as to produce a woven material with predominantly dry fiber reinforcement strands on one side and a combination of dry fiber reinforcement strands and thermoplastic filaments on the other side. As before, the woven material is pressed onto a layer of thermoplastic material which is thinner than the woven material, with the woven material which is a combination of dry fiber and thermoplastic filaments adjacent to the layer of thermoplastic material, and sufficient heat is supplied to melt the thermoplastic material. After cooling, the dry fiber reinforcement strands are fused with and partially embedded in the layer of thermoplastic material. The exposed dry fiber strands are then coated with thermoset resin.

An adhesive strip 10 is placed on an uncured thermoset composite structure 19. The adhesive strip is placed so that the layer of thermoset resin coated, dry fiber reinforcement 16 is adjacent to the composite structure 19. The structure 19, with adhesive strip 10 in place, is cured as normally required for the thermoset composite to produce a bonding surface 20. During cure the thermoset resin 18 will wet-out (impregnate) the exposed dry fiber reinforcement 16, which then becomes anchored to the thermoset structure 19. In this way the dry fiber reinforcement 16 forms a mechanical lock between the thermoset structure 19 and the thermoplastic adhesive strip 10, as shown in FIG. 4.

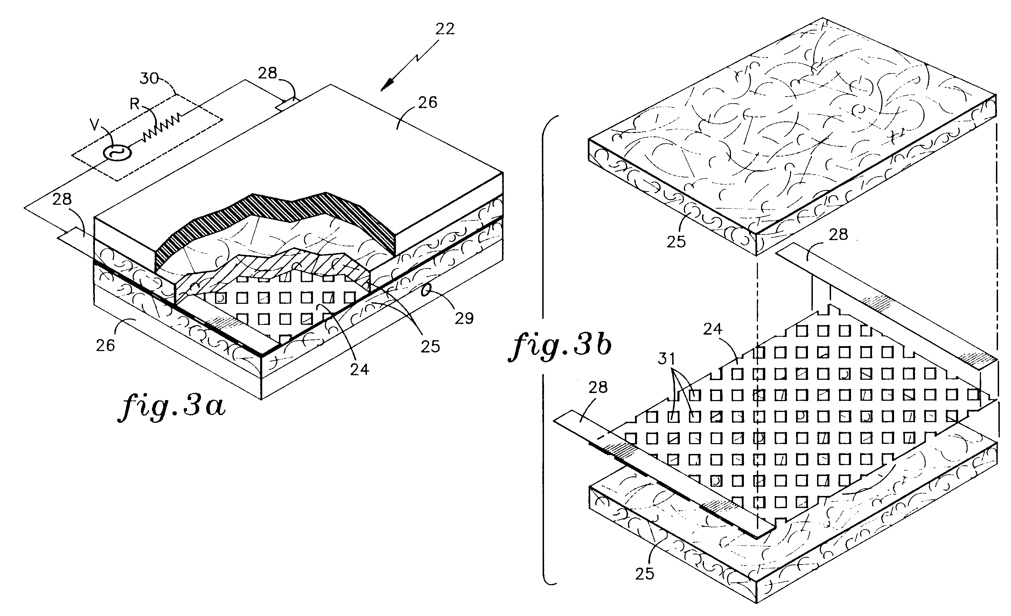

Heating means is required to melt the thermoplastic of the adhesive strips 10 of the two prepared bonding surfaces. FIG. 3a and 3b illustrate a heating element 22 which provides means to heat the bonding surfaces. The heating element 22 is comprised of a resistance heating material 24 sandwiched between two layers of electrical insulation 25. The resistance heating material 24 and the layers of electrical insulation 25 are encased within a layer of thermoplastic adhesive 26 which is compatible with the thermoplastic material of the bonding surfaces. The resistance heating material 24 includes a pair of electrical leads 28 which extend across the full width of the resistance heating material 24 and are connected to an electrical power supply 30. In addition, the heating element 22 may include one or more thermocouples 29 to monitor the temperature during the bonding process.

The heating element 22 is fabricated in the following manner. A sheet of thin metallic foil is precision slit and expanded to create a grid-like structure having a plurality of open areas. This structure is commonly referred to as pierced and stretched foil and is commercially available in various sizes. The pair of electrical leads are then attached to each end of the expanded foil. The metallic foil and electric leads are then sandwiched between two layers of electrical insulation. The sandwiched metal foil and electrical insulation is then laminated with a film of thermoplastic material. The film of thermoplastic material is thick enough to fill any voids or air pockets in the electrical insulation or the metallic foil.

The material chosen for the metallic foil and the thickness and dimensions of the heating element are dependent upon the heating requirements of the specific application For the specific application disclosed in FIGS. 1-5, a stainless steel foil having a thickness of approximately 0.0076 cm (0.003 in) and expanded to have approximately 65% open area was successfully tested. Although a pierced and expanded foil is disclosed in FIGs. 3a and 3b as the resistance heating material, other forms of electrical heating element materials, such as etched foils, stamped elements, wound wire serpentine, and thin metallic sheets, may be used successfully.

The electrical insulation provides means to prevent short circuits during the heating process. Short circuits may occur if the dry fiber reinforcement material is electrically conductive or if the structures to be bonded are electrically conductive. Short circuits would cause cold spots to occur during the heating process and may cause damage to the thermoset composite structure. The layers of electrical insulation may also be used as a thermal barrier about the resistance heating material to provide resistance to the outward flow of heat from the heating element. The thermal resistance or insulation may improve the uniformity of the heat distribution by urging the heat generated by the heating element to spread evenly throughout the heating element.

A material which has been successfully tested for the electrical insulation is fiberglass scrim. Other materials may also be successfully used, such as plastic films or ceramic fibers. The material chosen for the layer of electrical insulation should be one which permits the thermoplastic material to pass through during the lamination of the heating element 22. In addition, the material chosen for the layers of electrical insulation should be one which can withstand the temperatures encountered during the bonding process.

Low resistance electrical leads are used to avoid overheating of the electrical leads during the heating process. The electrical leads extend across the entire width of the metallic foil in order to provide uniform heating across the width of the foil and between the electrical leads. Uniform heating is desirable to avoid thermal anomalies, such as hot spots and cold spots, during the bonding process.

Although shown in FIGs. 3a and 3b as having two electrical leads, the heating element may have a plurality of electrical leads attached to it along its length. This configuration (not shown) provides a mechanism for sequentially heating segments of the heating element, where the segments are defined by adjacent electrical leads. Sequential heating may be desirable if the bond length is extremely long. It should be noted, however, that the electrical leads, since they are low resistance, may cause cold spots to occur in the region adjacent to the electrical leads. If the heating element is to be powered sequentially, each segment of the heating element should be maintained above the melt temperature until the adjacent segment is heated to the melt temperature. This provides an overlap around the electrical leads of temperatures above the melt temperature and prevents a cold spot from occurring.

A pair of cured structures 19, 19' are bonded together by placing the heating element 22 between the prepared bonding surfaces 20, 20' with the bonded adhesive strips 10, 10', as shown in FIG. 4. Pressure of approximately 6.90 X 10⁴ N/m² to 20.70 X 10⁴ N/m² (10 to 30 psi) is applied to the joint and electrical energy is passed through the heating element 22 by means of the electrical power supply 30. The joint is heated above the melting temperature of PEEK. This temperature is maintained for a sufficient time to fuse the thermoplastic adhesive in the joint.

For the adhesive strips as described above it is believed that the temperature of the joint should be raised above the melting temperature of PEEK of about 616K (650°F) in approximately one minute and maintained at that temperature for approximately 15 seconds. The rate of temperature increase and duration of the heating process is limited by the heat transfer rate of the joint and structure in order to avoid degradation of the adjacent thermoset composite structures 19, 19'. Upon termination of the electrical energy supply, the joint is allowed to cool by using the bonded structures 19, 19' as heat sinks. The entire fusion cycle should take approximately two to three minutes.

In certain instances, the availability of local structure to act as a heat sink may vary along the length of the joint. In these instances, heat balancing may be required in order to ensure uniform heating and cooling of the joint during the bonding process.

After the cooling period is completed, the structures are bonded as shown in FIG. 5. The various layers of thermoplastic adhesive 32 are fused together and the dry fiber reinforcement 16 is embedded and encapsulated by the thermoplastic adhesive 32 and the thermoset resin of the thermoset composite structures 19, 19'. The dry fiber reinforcement 16 provides a mechanical lock between the thermoplastic adhesive 32 and the thermoset composite structures 19, 19', which provides the bond strength. The heating element 22 remains in place and the electrical leads 28, 28 remain attached to the heating element 22 to allow for later reheating of the joint to permit repair or replacement of the bonded structures 19, 19'.

The replacement procedure for the bonded structure would comprise the following steps. First, the joint would be heated by supplying electrical energy to the heating element 22 sufficient to heat the joint above the melting temperature of the thermoplastic adhesive. The process would be maintained until the thermoplastic adhesive was melted, the joint could be separated, and the damaged structure could be removed. Second, the replacement structure, which would consist of a cured thermoset composite structure surfaced with thermoplastic adhesive in the joint zone (similar to the initial structure as shown in FIG. 4), is positioned in place of the removed structure. Third, a new heating element, which is positioned in the joint, is heated by supplying electrical energy as discussed previously for bonding structures. The entire replacement process, assuming a cured structure and new heating element are readily available, may be completed in a matter of minutes.

Although certain thermoplastic materials (PEEK and PEI) are suggested as particularly useful for the specific embodiment illustrated in FIGS. 1 to 5, the selection of these materials is not limiting and it should be understood that other thermoplastic materials may be equally applicable to the present invention. In addition, the present invention may, if desired, be practiced by using a single type of thermoplastic material as long as a layer of partially exposed dry fiber reinforcement (not embedded in the thermoplastic material) is maintained for embedding in the thermoset composite structure during the lay-up and curing process.

Although the invention has been shown and described with respect to exemplary embodiments thereof, it should be understood by those skilled in the art that various changes, omissions and additions may be made therein and thereto, without departing from the scope of the invention.

## Claims

1. A method of bonding two thermoset composite structures (19, 19') together using an integral heating element (22), comprising the steps of
providing bonding surfaces (20, 20') for the thermoset composite structures (19, 19') to be bonded together;
providing the heating element (22) for interposition between the bonding surfaces (20, 20') of the thermoset composite structures (19, 19') to be bonded together including the substeps of
connecting at least a pair of electrical leads (28, 28) to an electrical resistance heating material (24), and
sandwiching the electrical resistance heating material (24) between layers of electrical insulation (25);
interposing the heating element (22) between the bonding surfaces (20, 20') of the thermoset composite structures (19, 19') to be bonded together; and
passing electrical energy through the heating element (22) to bond the thermoset composite structures (19, 19') together;
characterized in that the electrical resistance heating material (24) sandwiched between layers of electrical insulation (25) is encased in a layer of thermoplastic adhesive material (26), and that the step of providing bonding surfaces (20, 20') for the thermoset composite structures (19, 19') to be bonded together comprises the substeps of
partially embedding dry fiber reinforcement (16 / 50) in a thermoplastic material (12, 14 / 54),
coating the exposed portion of the partially embedded dry fiber reinforcement (16 / 50) with a thermosetting resin (18) to form a thermoplastic adhesive strip (10 / 48)
placing the thermoplastic adhesive strip (10 / 48) in combination with the thermoset composite structures (19, 19') so that the thermosetting resin coated dry fiber reinforcement (16 / 50) is against the respective thermoset composite structure (19, 19'), and
curing the thermosetting resin coated dry fiber reinforcement (16 / 50) to bond the thermoplastic adhesive strips (10 / 48) to the thermoset composite structures (19, 19'), the thermoplastic material (12, 14 / 54) of the thermoplastic adhesive strips (10) defining the bonding surfaces (20, 20') of the thermoset composite structures (19, 19');
the step of passing electrical energy through the heating element (22) causing the thermoplastic material (12, 14 / 54) of the thermoplastic adhesive
the step of passing electrical energy through the heating element (22) causing the thermoplastic material (12, 14 / 54) of the thermoplastic adhesive strips (10 / 48) and the thermoplastic adhesive material (26) of the heating element (22) to fuse together to form the bond between the thermoset composite structures (19, 19').

2. The method of bonding two thermoset composite structures (19, 19') utilizing an integral heating element (20) of claim 1 characterized in that the substeps of providing bonding surfaces (20, 20') for the thermoset composite structures (19, 19') include
fusing together a layer of semi-crystalline thermoplastic material (12) and a layer of amorphous thermoplastic material (14),
partially embedding dry fiber reinforcement (16) in the layer of amorphous thermoplastic material (14),
coating the exposed portion of the partially embedded dry fiber reinforcement (16) with a thermosetting resin (18) to form a thermoplastic adhesive strip (10),
placing thermoplastic adhesive strips (10) in combination with the thermoset composite structures (19, 19') so that the thermosetting resin coated dry fiber reinforcement (16) is against the respective thermoset composite structures (19, 19'), and
curing the thermosetting resin coated dry fiber reinforcement (16) to bond the thermoplastic adhesive strips (10) to the thermoset composite structures (19, 19'), the semi-crystalline thermoplastic material (12) of the thermoplastic adhesive strips (10) defining the bonding surfaces (20, 20') of the thermoset composite structures (19, 19').

3. The method of bonding two thermoset composite structures (19, 19') utilizing an integral heating element (20) of claim 1 characterized in that the substeps of providing bonding surfaces (20, 20') for the thermoset composite structures (19, 19') include
fusing dry fiber reinforcement strands (50) and spun thermoplastic filaments to form commingled strands (52),
weaving the commingled strands (52) with dry fiber reinforcement strands (50) to form a material that is predominately dry fiber reinforcement (50) on one side and commingled strands (52) on the other side,
fusing the commingled strand (52) side of the material to a layer of thermoplastic material (54) so that the dry fiber reinforcement strands (50) are partially embedded in the thermoplastic material (54),
coating the exposed dry fiber reinforcement (50) strands of the embedded material with a thermosetting resin (18) to form a woven thermoplastic adhesive strip (48),
placing woven thermoplastic adhesive strips (48) in combination with the thermoset composite structures (19, 19') so that the thermosetting resin coated dry fiber reinforcement (50) strands are against the respective thermoset composite structures (19, 19'), and
curing the thermosetting resin coated dry fiber reinforcement (50) strands to bond the thermoplastic adhesive strips (48) to the thermoset composite structures (19, 19'), the thermoplastic material (54) of the woven thermoplastic adhesive strips (48) defining the bonding surfaces (20, 20') of the thermoset composite structures (19, 19').

4. The method of bonding two thermoset composite structures (19, 19') utilizing an integral heating element (20) of claim 1 characterized in that the substeps of providing bonding surfaces (20, 20') for the thermoset composite structures (19, 19') include
weaving dry fiber reinforcement strands (50) and thermoplastic filaments to form a woven material with predominantly dry fiber reinforcement strands (50) on one side and thermoplastic filaments on the other side,
fusing the thermoplastic filament side of the woven material to a layer of thermoplastic material (54) so that the dry fiber reinforcement strands (50) are partially embedded in the thermoplastic material (54),
coating the exposed dry fiber reinforcement (50) strands of the embedded material with a thermosetting resin (18) to form a woven thermoplastic adhesive strip (48),
placing woven thermoplastic adhesive strips (48) in combination with the thermoset composite structures (19, 19') so that the thermosetting resin coated dry fiber reinforcement (50) strands are against the respective thermoset composite structures (19, 19'), and
curing the thermosetting resin coated dry fiber reinforcement (50) strands to bond the thermoplastic adhesive strips (48) to the thermoset composite structures (19, 19'), the thermoplastic material (54) of the woven thermoplastic adhesive strips (48) defining the bonding surfaces (20, 20') of the thermoset composite structures (19, 19').

## Patentansprüche

1. Verfahren zum Verbinden zweier hitzegehärteter Verbundstrukturen (19, 19') unter Verwendung eines integralen Heizelements (22), umfassend die Schritte:
Schaffen von Bindeflächen (20, 20') für die miteinander zu verbindenden hitzegehärteten Verbundstrukturen (19, 19');
Bereitstellen des Heizelements (22) für die Einfügung zwischen die Bindeflächen (20, 20') der miteinander zu verbindenden, hitzegehärteten Verbundstrukturen (19, 19'), beinhaltend die Teilschritte:
Verbinden mindestens eines Paares elektrischer Leitungen (28, 28) mit einem elektrischen Widerstandsheizmaterial (24), und sandwichartiges Einschließen des elektrischen Widerstandsheizmaterials (24) zwischen Schichten elektrischer Isolierung (25);
Einfügen des Heizelements (22) zwischen die Bindeflächen (20, 20') der miteinander zu verbindenden, hitzegehärteten Verbundstrukturen (19, 19'); und
Durchleiten elektrischer Energie durch das Heizelement (22), um die hitzegehärteten Verbundstrukturen (19, 19') miteinander zu verbinden;
dadurch gekennzeichnet, daß das elektrische Widerstandsheizmaterial (24), welches zwischen den Schichten elektrischer Isolierung (25) sandwichartig eingefaßt ist, eingehüllt ist in einer Schicht aus thermoplastischem Klebstoff, und daß der Schritt des Schaffens von Bindeflächen (20, 20') für die miteinander zu verbindenden, hitzegehärteten Verbundstrukturen (19, 19') folgende Teilschritte aufweist:
teilweises Einbetten einer Trockenfaserverstärkung (16/50) in einem thermoplastischen Material (12, 14/54),
Überziehen des freiliegenden Teils der teilweise eingebetteten Trockenfaserverstärkung (16/50) mit einem hitzehärtbarem Harz (18) zum Bilden eines thermoplastischen Klebestreifens (10/48)
Anordnen des thermoplastischen Klebestreifens (10/48) in Kombination mit den hitzegehärteten Verbundstrukturen (19, 19') derart, daß die mit dem hitzehärtbaren Harz überzogene Trockenfaserverstärkung (16/50) an der jeweiligen hitzegehärteten Verbundstruktur (19, 19') anliegt, und
Aushärten der mit dem hitzehärtbaren Harz überzogenen Trockenfaserverstärkung (16/50), um die thermoplastischen Klebestreifen (10/48) an die hitzehärtbaren Verbundstrukturen (19, 19') zu binden, wobei das thermoplastische Material (12, 14/54) der thermoplastischen Klebestreifen (10) die Bindeflächen (20, 20') der hitzgehärteten Verbundstrukturen (19, 19') definiert;
daß der Schritt des Durchleitens elektrischer Energie durch das Heizelement (22) das thermoplastische Material (12, 14/54) der thermoplastischen Klebestreifen (10/48) und den thermoplastischen Klebstoff des Heizelements (22) veranlaßt, miteinander zu verschmelzen und die Bindung zwischen den hitzegehärteten Verbundstrukturen (19, 19') zu bilden.

2. Verfahren zum Verbinden zweier hitzegehärteter Verbundstrukturen (19, 19') unter Verwendung eines integralen Heizelements (20) nach Anspruch 1,
**dadurch gekennzeichnet**,
daß die Teilschritte des Schaffens von Bindeflächen (20, 20') für die hitzegehärteten Verbundstrukturen (19, 19') beinhalten:
Zusammenschmelzen einer Schicht aus halbkristallinem thermoplastischen Material (12) und einer Schicht aus amorphem thermoplastischen Material (14),
teilweises Einbetten einer Trockenfaserverstärkung (16) in der Schicht aus amorphem thermoplastischen Material (14),
Überziehen des freiliegenden Teils der teilweise eingebetteten Trockenfaserverstärkung (16) mit einem hitzehärtbaren Harz (18), um einen thermoplastischen Klebestreifen (10) zu bilden,
Anordnen von thermoplastischen Klebestreifen (10) in Kombination mit den hitzegehärteten Verbundstrukturen (19, 19') derart, daß die mit hitzehärtbarem Harz beschichtete Trockenfaserverstärkung (16) gegen die jeweilige hitzegehärtete Verbundstruktur (19, 19') anliegt,
und
Aushärten der mit hitzehärtbarem Harz beschichteten Trockenfaserverstärkung (16), um die thermoplastischen Klebestreifen (10) mit den hitzegehärteten Verbundstrukturen (19, 19') zu verbinden, wobei das halbkristalline thermoplastische Material (12) der thermoplastischen Klebestreifen (10) die Bindeflächen (20, 20') der hitzegehärteten Verbundstrukturen (19, 19') definiert.

3. Verfahren zum Verbinden zweier hitzegehärteter Verbundstrukturen (19, 19') unter Verwendung eines integralen Heizelements (20) nach Anspruch 1,
**dadurch gekennzeichnet**,
daß die Teilschritte des Schaffens von Bindeflächen (20, 20') für die hitzegehärteten Verbundstrukturen (19, 19') beinhalten:
Zusammenschmelzen von Trockenfaserverstärkungslitzen (50) und gesponnenen thermoplastischen Filamenten, um Mischlitzen (52) zu bilden,
Verweben der Mischlitzen (52) mit Trockenfaserverstärkungslitzen (50), um ein Material zu bilden, welches auf einer Seite vorherrschend eine Trockenfaserverstärkung (50) ist und auf der anderen Seite vorherrschend aus Mischlitzen (52) besteht,
Verschmelzen der Seite der Mischlitzen (52) des Materials mit einer Schicht aus thermoplastischem Material (50) derart, daß die Trockenfaserverstärkungslitzen (50) teilweise in dem thermoplastischem Material (54) eingebettet sind,
Überziehen der freiliegenden Trockenfaserverstärkungslitzen (50) des eingebetteten Materials mit einem hitzehärtbaren Harz (18), um einen gewebten thermoplastischen Klebestreifen (48) zu bilden,
Zusammenfügen von gewobenen thermoplastischen Klebestreifen (48) mit den hitzegehärteten Verbundstrukturen (19, 19') derart, daß die mit hitzehärtbarem Harz überzogenen Trockenfaserverstärkungslitzen (50) an den jeweiligen hitzegehärteten Verbundstrukturen (19, 19') anliegen, und
Aushärten der mit dem hitzehärtbarem Harz überzogenen Trockenfaserverstärkungslitzen (50), um die thermoplastischen Klebestreifen (48) an den hitzegehärteten Verbundstrukturen (19, 19') zu binden, wobei das thermoplastische Material (54) der gewobenen thermoplastischen Klebestreifen (48) die Bindeflächen der hitzegehärteten Verbundstrukturen (19, 19') definiert.

4. Verfahren zum Verbinden von zwei hitzegehärteten Verbundstrukturen (19, 19') unter Verwendung eines integralen Heizelements (20) nach Anspruch 1,
**dadurch gekennzeichnet**,
daß die Teilschritte zum Schaffen von Bindeflächen (20, 20') für die hitzegehärteten Verbundstrukturen (19, 19') beinhalten:
Weben von Trockenfaserverstärkungslitzen (50) und thermoplastischen Filamenten, um einen Webstoff zu bilden, bei dem auf der einen Seite vornehmlich Trockenfaserverstärkungslitzen (50) und auf der anderen Seite vornehmlich thermoplastische Filamente vorhanden sind,
Verschmelzen der Seite der thermoplastischen Filamente des Webstoffs mit einer Schicht aus thermoplastischen Material (54) derart, daß die Trockenfaserverstärkungslitzen (50) teilweise in dem thermoplastischen Material (54) eingebettet sind,
Überziehen der freiliegenden Trockenfaserverstärkungslitzen (50) des eingebetteten Materials mit einem hitzhärtbarem Harz (18), um einen gewobenen thermoplastischen Klebestreifen (48) zu bilden, Zusammenfügen von gewebten thermoplastischen Klebestreifen (48) mit den hitzegehärteten Verbundstrukturen (19, 19') derart, daß die mit dem hitzehärtbarem Harz überzogenen Trockenfaserverstärkungslitzen (50) gegen die jeweiligen hitzegehärteten Verbundstrukturen (19, 19') anliegen, und
Aushärten der mit dem hitzehärtbarem Harz überzogenen Trockenfaserverstärkungslitzen (50), um die thermoplastischen Klebestreifen (48) an den hitzegehärteten Verbundstrukturen (19, 19') zu binden, wobei das thermoplastische Material (54) der gewobenen thermoplastischen Klebestreifen (48) die Bindeflächen (20, 20') der hitzegehärteten Verbundstrukturen (19, 19') definiert.

## Revendications

1. Procédé de soudage de deux structures composites (19, 19') thermodurcissables, ensemble, à l'aide d'un élément chauffant (22) monobloc, comprenant les étapes de
agencement de surface des soudage (20, 20') pour les structures composites (19, 19') thermodurcissables à souder ensemble;
agencement de l'élément chauffant (22) afin d'être disposé entre les surfaces de soudage (20, 20') des structures composites thermodurcissables (19, 19') à souder ensemble, comprenant les étapes secondaires de
connexion d'au moins un couple de conducteurs électriques (28, 28) à un matériau chauffant par résistance électrique (24), et
prise en sandwich du matériau chauffant par résistance électrique (24) entre des couches d'isolation électrique (25);
disposition de l'élément chauffant (22) entre les surfaces de soudage (20, 20') des structures composites thermodurcissables (19, 19') à souder ensemble; et
passage d'une énergie électrique dans l'élément chauffant (22) afin de souder ensemble les structures composites thermodurcissables (19, 19');
caractérisé en ce que le matériau chauffant par résistance électrique (24) pris en sandwich entre les couches d'isolation électrique (25) est encastré dans une couche de matériau adhésif (26) thermoplastique, et en ce que l'étape d'agencement de surface de soudage (20, 20') pour les structures composites thermodurcissables (19, 19') à souder ensemble comprend les étapes secondaires de
encastrement partiel de fibres sèches de renforcement (16 / 50) dans un matériau thermoplastique (12, 14 / 54),
revêtement de la partie exposée des fibres sèches de renforcement (16 / 50) partiellement noyées, avec une résine thermodurcissable (18), pour former une bande adhésive (10/48) thermoplastique,
mise en place de la bande adhésive thermoplastique (10 / 48) en combinaison avec les structures composites thermodurcissables (19, 19'), de manière que la résine thermodurcissable recouverte de fibres sèches de renforcement (16 / 50) soit placée contre la structure composite thermodurcissable (19, 19') respective, et
traitement de la résine thermodurcissable recouverte de fibres sèches de renforcement (16 / 50), afin de souder les bandes adhésives thermoplastiques (10 / 48) aux structures composites thermodurcissables (19, 19') le matériau thermoplastique (12, 14 / 54) des bandes adhésives thermoplastiques (10) définissant les surfaces de soudage (20, 20') des structures composites thermodurcissables (19, 19');
l'étape de passage d'une énergie électrique dans l'élément chauffant (22) forçant le matériau thermoplastique (12, 14 / 54) des bandes adhésives thermoplastiques (10 / 48) et le matériau adhésif thermoplastique (26) de l'élément chauffant (22) à fondre ensemble pour former le soudage entre les structures composites thermodurcissables (19, 19').

2. Procédé de soudage de deux structures composites thermodurcissables (19, 19') à l'aide d'un élément chauffant (20) monobloc selon la revendication 1, caractérisé en ce que les étapes secondaires d'agencement de surfaces de soudage (20, 20') pour les structures composites thermodurcissables (19, 19') comprennent
la fusion ensemble d'une couche de matériau thermoplastique (12) semicristallin et d'une couche thermoplastique (14) amorphe,
un encastrement partiel de fibres sèches de renforcement (16) dans la couche de matériau plastique (14) amorphe,
un revêtement de la partie exposée des fibres de renforcement (16) partiellement encastrés avec une résine thermodurcissable (18), pour former une bande adhésive (10) thermoplastique,
la mise en place des bandes adhésives (10) thermoplastiques en combinaison avec les structures composites thermodurcissables (19, 19'), de manière que les fibres sèches de renforcement (16) recouvertes de résine thermodurcissable soient placées contre les structures composites thermodurcissables (19, 19') respectives, et
le traitement des fibres sèches de renforcement (16) recouvertes de résine thermodurcissable, afin de souder les bandes adhésives (10) thermoplastiques sur les structures composites thermodurcissables (19, 19'), le matériau thermoplastique (12) semicristallin des bandes adhésives thermoplastiques (10) définissant les surfaces de soudage (20, 20') des structures composites thermodurcissables (19, 19').

3. Procédé de soudage de deux structures composites thermodurcissables (19, 19') à l'aide d'un élément chauffant (20) monobloc selon la revendication 1, caractérisé en ce que les étapes secondaires d'agencement de surface de liaison (20, 20') pour les structures composites thermodurcissables (19, 19') comprennent
la fusion de cordon de fibres sèches de renforcement (50) et de filaments thermoplastiques filés afin de former des cordons (52) mélangés,
le tissage des cordons mélangés (52) avec des cordons de fibres sèches de renforcement (50), pour former un matériau qui comprend principalement des fibres sèches de renforcement (50) d'un coté et des cordons mélangés (52) de l'autre côté,
la fusion, du coté du cordon mélangé (52), du matériau avec une couche de matériau thermoplastique (54), de manière que les cordons de fibres sèches de renforcement (50) soient partiellement encastrés dans le matériau thermoplastique (54),
le revêtement des cordons de fibres sèches de renforcement (50) exposés du matériau encastré avec une résine thermodurcissable (18) pour former une bande adhésive thermoplastique (48) tissée,
la mise en place des bandes adhésives thermoplastiques (48) tissées en combinaison avec les structures composites thermodurcissables (19, 19'), de manière que les cordons de fibres sèches de renforcement (50) recouvertes de résine thermodurcissable soient placés contre les structures composites thermodurcissables (19, 19') respectives, et
le traitement des cordons de fibres sèches de renforcement (50) recouvertes de résine thermodurcissables, afin de souder les bandes adhésives thermoplastiques (48) aux structures composites thermodurcissables (19, 19'), le matériau thermoplastique (54) des bandes adhésives thermoplastiques (48) tissées définissant les surfaces de soudage (20, 20') des structures composites thermodurcissables (19, 19').

4. Procédé de soudage de deux structures composites thermodurcissables (19, 19') a l'aide d'un élément chauffant (20) monobloc selon la revendication 1, caractérisé en ce que les étapes secondaires d'agencement de surface de soudage (20, 20') pour les structures composites thermodurcissables (19, 19') comprennent
le tissage des cordons de fibres sèches de renforcement (50) et de filaments thermoplastiques afin de former un matériau tissé comprenant principalement des cordons de fibres sèches de renforcement (50) d'un côté et des filaments thermoplastiques de l'autre côté,
la fusion du coté filament thermoplastique du matériau tissé avec une couche de matériau thermoplastique (54), de manière que les cordons de fibres sèches de renforcement (50) soient partiellement noyés dans le matériau thermoplastique (54),
le revêtement des cordons de fibres sèches de renforcement (50) exposés du matériau noyé avec une résine thermodurcissable (18) afin de former une bande adhésive thermoplastique (48) tissée,
la mise en place des bandes adhésives thermoplastiques (48) tissées en combinaison avec les structures composites thermodurcissables (19, 19') de manière que les cordons de fibre sèches de renforcement (50) recouvertes de résine thermodurcissable soient placés contre les structures composites thermodurcissables (19, 19') respectives; et
le traitement des cordons de fibre sèches de renforcement (50) recouvertes de résine thermodurcissable, afin de souder les bandes adhésives thermoplastiques (48) aux structures composites thermodurcissables (19, 19'), le matériau thermoplastique (54) des bandes adhésives thermoplastiques (48) tissées définissant les surfaces de soudage (20, 20') des structures composites thermodurcissables (19, 19').
